# EUROPÄISCHE PATENTSCHRIFT

(11) **EP 2 866 581 B1**
(45) Veröffentlichungstag und Bekanntmachung des Hinweises auf die Patenterteilung: **18.07.2018**
(21) Anmeldenummer: 12733067.8
(22) Anmeldetag: 29.06.2012
(51) Int. Cl.: B65G 27/02, C08B 30/06, C08B 30/14, C08B 30/16, C08B 30/18

(54) **THERMISCH INHIBIERTE STÄRKE UND STÄRKEHALTIGE MEHLE**
THERMALLY INHIBITED STARCH AND STARCHY FLOURS
AMIDON INHIBÉ THERMIQUEMENT ET FARINES CONTENANT DE L'AMIDON

(43) Veröffentlichungstag der Anmeldung: 06.05.2015
(73) Patentinhaber: Agrana Stärke GmbH, 1220 Wien (AT)
(72) Erfinder: GRÜLL, Dietmar, A-3442 Langenschönbichl (AT); WASTYN, Marnik Michel, A-2320 Schwechat (AT); BRUNNER, Karin, A-3430 Tulln (AT)
(74) Vertreter: Sonn & Partner Patentanwälte
(86) Internationale Anmeldenummer: PCT/EP2012/062715
(87) Internationale Veröffentlichungsnummer: WO 2014/000813

(56) Entgegenhaltungen:
- WO-A1-96/04316
- US-A- 2 818 357
- US-A- 5 932 017
- US-A1- 2009 281 304

## Beschreibung

Die vorliegende Erfindung betrifft ein Verfahren zur Herstellung von thermisch inhibierter Stärke durch thermische Behandlung von bis zu einem Gehalt an Trockensubstanz von größer gleich 98%-Masse, besonders bevorzugt 99%-Masse, vorgetrockneter, nativer Stärke.

Native Stärkekörner sind in kaltem Wasser unlöslich. Wenn native Körner in Wasser dispergiert und erwärmt werden, werden sie allerdings hydratisiert und quellen. Mit fortgesetztem Erhitzen, mit Scherung oder Bedingungen eines extremen pHs, zerfallen die gequollenen Körner und die Stärkemoleküle werden im Wasser dispergiert, d. h. solubilisiert. Vorgelatinierte Stärken (d. h. in kaltem Wasser lösliche oder quellende Stärken) werden typischerweise durch thermische, chemische oder mechanische Gelatinierung hergestellt. Die vorliegende Erfindung betrifft gleichermaßen native, als auch vorgelatinierte Stärke und stärkehaltige Mehle.

Der Stand der Technik lehrt, dass Stärken zu verschiedenen Zwecken erhitzt werden können, so z. B. zum Trocknen, zum Verdampfen von Fehlaromen, zum Verleihen eines rauchigen Geschmacks, zur Entkeimung oder zur Dextrinisierung.

US 3 977 897 B beschreibt eine nicht chemisch inhibierte Stärke, die durch kontrolliertes Erhitzen bei spezifischem pH-Wert einer wässrigen Suspension einer amylosehaltigen Stärke in intakter granulärer Form und eines anorganischen Salzes hergestellt wird, was zum Anstieg der Gelatinierungstemperatur der Stärke führt.

US 4 303 451 B offenbart das Erhitzen von Wachsmais-Stärke bei einer Temperatur im Bereich von 120 bis 200°C bei ihrem natürlicher Weise auftretendem pH, um holzige Aromen zu entfernen und die Textur bei der Vorgelatinierung zu modifizieren.

Die JP 61-254602 offenbart das Erhitzen von Wachsmaisstärke und Wachsmaisstärkederivaten bei einer Temperatur von 100 bis 200°C, um eine Stärke mit Emulgator-Eigenschaften als Ersatz für Gummiarabikum bereitzustellen. In diesem Verfahren wird die Stärke in Gegenwart von Feuchtigkeit erhitzt, vorzugsweise unter sauren Bedingungen bei pH 4,0 bis 5,0, um die Stärke zum Erhalten der Emulgator-Eigenschaften zu hydrolysieren.

US 4 303 452 B offenbart eine Rauchbehandlung von Wachsmaisstärke, um die Gelstärke zu verbessern und einen rauchartigen Geschmack hervorzurufen. Um der sauren Reaktion des Rauches entgegenzuwirken und ein Stärke-Endprodukt mit einem pH von 4 bis 7 zu erhalten, wird der pH-Wert der Stärke vor dem Räuchern auf einen Bereich von 9 bis 11 angehoben. Der bevorzugte Wassergehalt der Stärke während des Räucherns beträgt 10 bis 20%.

Obwohl diese Dokumente offenbaren, dass Stärken zu verschiedenen Zwecken erhitzt werden, offenbaren sie nicht die Verwendung von Hitze zum Herstellen einer inhibierten Stärke oder Herstellung einer Stärke, die ohne die Verwendung von chemischen Reagenzien inhibiert ist.

Wenn man native Stärkekörner in Wasser dispergiert und erhitzt, werden die Körner ab etwa 60°C hydratisiert, schwellen und erreichen den Spitzenwert der Viskosität im Bereich von 65 bis 95°C. Dieser Anstieg in der Viskosität ist eine erwünschte Eigenschaft in vielen Lebensmittel- und industriellen Verwendungen und resultiert auf der physikalischen Kraft der Friktion zwischen den stark gequollenen Körnern. Gequollene, hydratisierte Stärkekörner sind jedoch andererseits ziemlich fragil, beim Halten der Stärkeaufschlämmung bei Temperaturen von 92 bis 95°C beginnt eine Fragmentierung der Stärkekörner und die Viskosität bricht zusammen. Scherung oder extreme pH-Bedingungen führen tendenziell auch zum Aufbrechen und Fragmentieren der Körner, so dass die Stärkepolymere dissoziieren und eine Solubilisierung eintritt, was ebenfalls zu einem schnellen Zusammenbruch der ursprünglich hohen Viskosität führt.

Es war bereits bekannt, dass sowohl das Schwellen der Stärkekörner, als auch der Zusammenbruch der Viskosität durch Behandeln der Stärke mit chemischen Reagenzien, welche intermolekulare Brücken oder Vernetzungen zwischen den Stärkemolekülen ausbilden, inhibiert werden kann. Die Vernetzungen verstärken die assoziativen Wasserstoffbindungen, welche die Stärkekörner zusammenhalten, begrenzen das Schwellen derselben und inhibieren dementsprechend den Zerfall und die Fragmentierung der Körner. Aufgrund dieser Inhibierung werden vernetzte Stärken auch inhibierte Stärken genannt. Da chemisch vernetzte Stärken in vielen Verwendungen eingesetzt werden, in denen eine Stärkepaste von stabiler Viskosität gebraucht wird, wäre die Möglichkeit, native oder modifizierte Stärke ohne die Verwendung von Chemikalien zu inhibieren, so dass sie die gleichen Eigenschaften aufweisen wie chemisch vernetzte Stärke, bezüglich Kosten, Zeitaufwand und in Bezug auf die Reduktion der Verwendung von Chemikalien vorteilhaft. Im Vergleich zu den chemisch inhibierten Stärken bzw. Mehlen wären derartige Produkte besonders aus ökonomischer, als auch aus ökologischer Sicht vorteilhaft und würden dem Markttrend nach natürlicheren Produkten wie z.B. Clean Label Produkten (deklarationsfreie Produkte) vermehrt entsprechen.

Aus der WO 96/04315 A1 und der WO 96/04316 A1 sind thermisch inhibierte, vorgelatinisierte bzw. nicht-vorgelatinisierte granuläre Stärken oder thermisch inhibiertes, nicht-vorgelatinisiertes granuläres Mehl bekannt, hergestellt durch (a) Dehydrieren einer granulären Stärke oder eines granulären Mehls auf einen Feuchtigkeitsgehalt von weniger als 1 Gew.-%, um die Stärke im Wesentlichen wasserfrei zu machen; und (b) Wärmebehandlung der im Wesentlichen wasserfreien Stärke oder des im Wesentlichen wasserfreien Mehls bei einer Temperatur von 100°C oder darüber für eine Zeitdauer, die hinreichend ist, um die Stärke oder das Mehl zu inhibieren, wobei die Schritte der Dehydrierung und des Wärmebehandelns in einem Fließssbett-Reaktor oder Trockner durchgeführt werden.

Fließbett- bzw. Wirbelschichtreaktoren und -Trockner weisen jedoch bekanntermaßen neben einigen Vorteilen auch erhebliche Nachteile auf, beispielsweise eine Verweilzeitverteilung des Fluids durch Dispersion, eine Verweilzeitverteilung des Feststoffes durch Rückvermischung, eine Erosion des Gefäßes und Abrieb der Feststoffteilchen und Apparatewände, eine schwierige Maßstabsvergrößerung und Modellierung sowie aufwendigen Explosionsschutz und intensiven energetischen Bedarf. Auch müssen im oberen Teil des Reaktors vielfach Gas-Feststoff-Trenneinrichtungen (z. B. Zyklone) eingebaut werden und es ist wegen der Gefahr des Partikelaustrages die Strömungsgeschwindigkeit nach oben begrenzt. Die bei Wirbelschichten vielfach auftretenden Inhomogenitäten können den Betrieb insofern erschweren, als mit sehr uneinheitlichen Verweilzeitverteilungen des Reaktionsgemisches gerechnet werden muss. Besonders in der brodelnden oder blasenbildenden Wirbelschicht ist die Aufstiegsgeschwindigkeit der weitgehend feststofffreien Blasen sehr uneinheitlich.

Aus dem Artikel von Dipl.-Ing. Fritz Stoff in Chemie-Ing.-Technik, 35. Jahrgang 1963, Nr. 4, Seiten 283-286) ist ein sogenannter Wendelschwingförderer oder Spiraltrockner bekannt.

Ein Wendelschwingförderer oder Spiraltrockner besteht zumeist aus einem geschlossenen Rohrsystem aus rostfreiem Stahl. Das Rohr ist dabei auf einem Rahmen fixiert, welcher mittels eines Motors in vibrierende Bewegung versetzt wird. Je nach Motorwinkel und Geschwindigkeit der Vibration werden die Partikel schneller oder langsamer durch das Rohr transportiert und so die für das Produkt gewünschte Flussrate eingestellt. Innerhalb des Rohrs ist es möglich eine definiert kontrollierte Atmosphäre einzustellen, beispielsweise ist es mittels elektrischer Heizung der Rohrwandung möglich, Temperaturen bis 650°C zu erzeugen. Über eine gravimetrisch gesteuerte Feed-Dosierung, oder alternativ auch manuell, wird das Produkt in das Spiralrohr zugegeben und hat dann abhängig von der Produktdichte und je nach eingestellter Flussrate eine definierte Verweilzeit im Wendelschwingförderer oder Spiraltrockner. Benötigt man eine längere Behandlungszeit, besteht die Möglichkeit zur Rezirkulation des Materials. Die Reinigung des Systems kann durch Abwesenheit von Totpunkten problemlos erfolgen. Die Verweilzeit der Partikel ist indirekt proportional mit der Geschwindigkeit des Motors, das heißt je schneller der Motor läuft, desto stärker wird vibriert und desto kürzer verbleibt das Produkt in dem Rohr.

Aus der US 2 818 357 B ist ein Verfahren zur Herstellung von Transformation- oder Abbauprodukten von hoch molekularen Kohlenwasserstoffen durch Erhitzen, sowie eine Vorrichtung zur Durchführung eines solchen Verfahrens, im Prinzip und wie aus Fig. 1 des genannten Dokuments ersichtlich ein Wendelschwingförderer, bekannt. Gemäß Spalte 3, Zeilen 51-62, können in der geoffenbarten Vorrichtung chemische Reaktionen zwischen Feststoffen, gemäß dem geoffenbarten Verfahren, durchgeführt werden. So ist es beispielsweise möglich, Cellulose- oder Stärkeether durch Erhitzen einer Mischung von Cellulose oder Stärke mit Alkali und Chloressigsäure, gemäß dem beschriebenen Verfahren, zu erhalten. Es ist dabei, gemäß der Offenbarung der US 2 818 357 B, jedoch nötig, während der Reaktion unter Luftabschluss zu arbeiten. Vollständiger Ausschluss von Luft ist sehr wichtig, da dadurch ein unerwünschter Abbau der Cellulose oder Stärke verhindert wird.

Aufgabe der vorliegenden Erfindung ist es, die Nachteile der im Stand der Technik beschriebenen Verfahren zu überwinden und thermisch inhibierte Stärke und stärkehaltige Mehle, hergestellt nach einem alternativen Verfahren bzw. in einer alternativen Vorrichtung, zur Verfügung zu stellen.

Erfindungsgemäß wird diese Aufgabe dadurch gelöst, dass thermisch inhibierte Stärke und/oder stärkehaltige Mehle durch thermische Behandlung von bis zu einem Gehalt an Trockensubstanz von größer gleich 98%-Masse, besonders bevorzugt 99%-Masse vorgetrockneter, nativer Stärke, mit einem pH von mindestens 7 hergestellt werden, wobei die thermische Behandlung in Gegenwart von mind. 0,1 Vol.% Sauerstoff bis Luftsauerstoff bei einer Temperatur der Stärke, nachfolgend als Produkttemperatur bezeichnet, von zwischen 150 und 200°C in einem Wendelschwingförderer thermisch behandelt wird. Überraschenderweise hat sich gezeigt, dass bei der Behandlung von vorgetrockneter nativer Stärke unter den angegebenen Bedingungen, entgegen der Offenbarung aus der US 2 818 357 B, nicht zu einem thermischen Abbau der Produkte, sondern bei Anwesenheit von Luft bzw. Luftsauerstoff zu einer thermischen Inhibierung der Produkte kommt. Die thermisch inhibierten Stärken können aus einer beliebigen Quelle, wie beispielsweise Banane, Mais, Erbse, Kartoffel, Süßkartoffel, Gerste, Weizen, Reis, Sago, Amaranth, Tapioka, Sorghum, sowie Stärke mit hohem oder auch niedrigem Amylosegehalt und dergleichen sein. Die Bezeichnung Stärke soll auch Stärke umfassen, die Protein enthält, wobei das Protein entweder endogenes Protein oder zugesetztes Protein aus einer Tier- oder Pflanzenquelle, wie z. B. Zein, Albumin und Sojaprotein, ist. Der Ausdruck "native Stärke", wie er hier verwendet wird, bezeichnet eine Stärke, wie sie in der Natur gefunden wird. Die Stärken können native Stärken sein oder alternativ können die Stärken auch durch Enzyme, Wärme- oder Säurekonversion, Oxidation, Phosphorylierung, Veretherung (insbesondere Hydroxyalkylierung), Veresterung und chemische Vernetzung modifiziert sein. Gegebenenfalls werden die Ausgangsprodukte vorgetrocknet, da, wenn Stärken in Gegenwart von Wasser Wärme unterworfen werden, eine Säurehydrolyse oder -abbau der Stärke auftreten kann. Hydrolyse oder Abbau wird eine Inhibierung beeinträchtigen oder verhindern; daher müssen die Bedingungen für die Dehydratisierung der Stärke so gewählt werden, dass eine Inhibierung gegenüber Hydrolyse oder Abbau begünstigt ist. Obgleich beliebige Bedingungen, die diesen Kriterien genügen, verwendet werden können, bestehen geeignete Bedingungen in einer Dehydratisierung bei niedrigen Temperaturen oder einer Erhöhung des pHs der Stärke vor der Dehydratisierung. Die bevorzugten Bedingungen bestehen in einer Kombination aus niedriger Temperatur und neutralem bis basischem pH. Vorzugsweise werden die Temperaturen zur Dehydratisierung der Stärke bei 125°C oder niedriger und bevorzugter bei Temperaturen oder einem Temperaturbereich zwischen 100° und 120°C gehalten. Die Dehydratisierungstemperatur kann niedriger als 100°C sein, allerdings wird eine Temperatur von mindestens 100°C bei der Entfernung von Feuchtigkeit wirksamer sein. Der pH ist mindestens 7, typisch sind die Bereiche pH 7,5 bis 10,5, vorzugsweise 8 bis 9,5, und am vorteilhaftesten liegt der pH über pH 8. Bei einem pH von über 12 kann leicht eine Gelatinierung auftreten; daher sind pH-Einstellungen unter 12 effektiver. Um den pH einzustellen, wird die Stärke in Wasser oder anderem wässrigen Medium aufgeschlämmt, und zwar typischerweise in einem Verhältnis von 1,5 bis 2,0 Gew.-Teilen Wasser zu 1,0 Gew.-Teilen Stärke, und der pH wird durch Zusatz einer geeigneten Base eingestellt. Puffer, z. B. Natriumphosphat, können bei Bedarf verwendet werden, um den pH aufrechtzuerhalten. Die Stärkeaufschlämmung wird dann entweder entwässert und getrocknet oder direkt getrocknet bis zur Gleichgewichtsfeuchte der Stärke, vorzugsweise aber zu einem Feuchtigkeitsgehalt von 2 bis 6%. Diese Trocknungsverfahren sind von den Schritten des thermischen Inhibierungsverfahrens zu unterscheiden, bei dem die Stärke dehydratisiert wird, bis sie wasserfrei ist. Alternativ kann eine Lösung einer Base auf die pulverförmige Stärke aufgesprüht werden, bis die Stärke den gewünschten pH erreicht, - es kann ein alkalisches Gas, z.B. NH₃, in die Stärke eindiffundiert werden, oder es können Trockenmischungen Stärke/Mehl zusammen mit Alkali verwendet werden.

Gemäß einer bevorzugten Ausführungsform der vorliegenden Erfindung erfolgt die thermische Behandlung der Stärke im Wendelschwingförderer in Gegenwart von mind. 0,5 Vol.-% Sauerstoff, bevorzugter in Gegenwart von mind. 5 Vol.-% Sauerstoff, noch bevorzugter in Gegenwart von mind. 10 Vol.-% Sauerstoff und am meisten bevorzugt in Gegenwart von Luftsauerstoff. Aus den, im Rahmen der vorliegenden Erfindung, durchgeführten Vergleichsversuchen geht hervor, dass, obwohl die Anwesenheit von Sauerstoff verfahrenstechnisch nicht auszuschließen ist, bei den erfindungsgemäßen Verfahrensbedingungen keinerlei unerwünschter Abbau der Stärkeprodukte beobachtet werden konnte. Im Gegensatz zu den Offenbarungen im Stand der Technik kann selbst bei Anwesenheit von Luftsauerstoff gearbeitet werden, wodurch das Verfahren zur Herstellung der erfindungsgemäßen thermisch inhibierten Stärke und/oder stärkehaltigen Mehle schnell, einfach und billig durchgeführt werden kann.

Vorzugsweise ist die erfindungsgemäße Stärke dadurch gekennzeichnet, dass die thermische Behandlung bei einer Produkttemperatur zwischen 155 und 175°C erfolgt. Die Wärmebehandlungsbereiche sind Temperaturen oder ein Temperaturbereich von größer als 150°C, für praktische Zwecke ist die Obergrenze der Wärmebehandlungstemperatur üblicherweise im Bereich von 200°C, wobei bei dieser Temperatur stark inhibierte Stärken erhalten werden können. Typischerweise wird die Wärmebehandlung bei 155 bis 175°C durchgeführt. Zeit- und Temperaturprofil werden vom gewünschten Inhibierungsgrad abhängen.

Gemäß einer bevorzugten Ausführungsform der vorliegenden Erfindung liegt die Stärke in granulärer Form vor, vorzugsweise in Form von nativer Stärke, also in Form einer Stärke, wie sie in der Natur gefunden wird.

Vorzugsweise weist die erfindungsgemäße Stärke einen Amylosegehalt von kleiner 5 %-Masse, bevorzugt kleiner 2 %-Masse auf. Amylopektin ist der Hauptbestandteil (normalerweise 70 bis 80%) von natürlicher pflanzlicher Stärke, z. B. der Mais- oder der Kartoffelstärke, während den zweiten Hauptanteil der Stärke mit normalerweise 20 bis 30% das Polysaccharid Amylose bildet. An Amylopektin reiche Stärken, also Stärken, welche einen Amylopektingehalt von mindestens 95%-Masse aufweisen, werden im allgemeinen Sprachgebrauch als Wachsstärken oder auch als amylopektinreiche Stärken bezeichnet.

Besonders bevorzugt ist die erfindungsgemäße Stärke mit einem Amylosegehalt von kleiner 5%-Masse, bevorzugt kleiner 2%-Masse, eine Maisstärke (im allgemeinen Sprachgebrauch werden derartige Stärken auch als Wachsmaisstärke bezeichnet).

Die vorliegende Erfindung wird nun anhand der folgenden Beispiele näher erläutert, auf welche sie jedoch nicht eingeschränkt sein soll.

### Charakterisierung der Viskosität:

Zur Charakterisierung von thermisch inhibierten Stärken verwendet man eine temperatur- und zeitabhängige Messung der Viskosität von Stärke und vergleicht diese mit dem Ausgangsreferenzmaterial. Dieser Vorgang erfolgt im Brabender Viskograph-E (hergestellt durch Brabender Technologie KG) und wird in Brabender Einheiten angegeben. Sie ist der Widerstand der Lösung, gemessen als Drehmoment. Die Stärke -Wasser Suspension wird im Brabender mit konstanter Heiz- bzw Kühlrate behandelt, wobei sich der Brabenderbecher mit konstanter Umdrehungszahl dreht und gleichzeitig Temperatur und Brabendereinheiten aufgenommen werden. Man erhält ein Messdiagramm, durch Auftragen von Temperatur und Brabendereinheiten gegen die Zeit. Thermisch nicht inhibierte Stärken verkleistern in der Regel in einem Bereich zwischen 60-70°C und erreichen ihr Maximum im Bereich von 65-95°C. Beim Halten der Temperatur für einen gewissen Zeitraum folgt dem Spitzenwert ein Abfall der Viskosität (Breakdown) und ein abermaliges Anziehen der Viskosität beim Abkühlen, welche in der Endviskosität resultiert.

Wie aus dem Stand der Technik bekannt, unterscheiden sich inhibierte Stärken von ihrem Ausgangsmaterial durch einen verminderten Breakdown. Das bedeutet, dass mit zunehmender Inhibierung der Zusammenbruch der Viskosität minimiert wird, bis hin zu einer Plateaubildung. Dabei kommt es ebenfalls zu einer Reduktion des Viskositätsmaximums.

### Brabender Verfahren:

Alle Proben werden für einen Neutralbrabender in demineralisiertem Wasser suspendiert, sodass man eine 6,25% Stärkeaufschlämmung in Trockensubstanz erhält. Die Suspension wird in die Probenschale des Brabender Viscograph-E mit einer 700cm/g Messdose gefüllt. Bei der Messung wird von 30°C auf 90°C aufgeheizt und diese Temperatur 30 Minuten gehalten. Danach wird wieder auf 30°C abgekühlt. Das Peakmaximum sowie der Zusammenbruch der Viskosität und die Endviskosität werden in Brabender Einheiten angegeben.

Bei den Beispielen kommt folgendes Material zum Einsatz:
- Native Wachsmaisstärke (Agrana, AT)
- Chemisch modifizierte Stärke; Agenajel 20.321 (Agrana, AT)
- Natriumhydrogencarbonat, 106323 (Merck, AT)
- Demineralisiertes Wasser
- Thermisch inhibierte Stärke; Novation® 2300 (National Starch, US)
- Thermisch inhibierte Stärke; Novation® 2600 (National Starch, US)
- Wendelschwingförderer bzw. Spiraltrockner (Revtech, FR)
- Laborwaage Kern PLJ 4000-2M
- Sartorius MA40, Moisture Analyser
- pH-Meter WTW pH 330
- Brabender Viskograph-E mit Steuereinheit und Kühlung (Brabender Technologie, DE)
- Büchnertrichter Haldenwanger 127C - 4
- Filterpapier Whatmann® 589/1
- Vakuumpumpe Knf Laboport N820.3AT.18
- Retsch-Trockner TG100
- Rührer IKA RW 47D
- Retsch-Mühle ZM200, 1mm Einsatz
- Diverses Laborzubehör

Bei dem verwendeten Wendelschwingförderer handelt es sich um ein Gerät im Technikumsmaßstab, mit den Anlagenabmessungen von Ø (Rohr innen) 0,10 m, L (Rohr) 35 m und V (Rohr) 0,275 m³. Als Prozessparameter werden eine Vibrationsgeschwindigkeit von 100%, ein Motorwinkel von 45° und Antriebsmotor 100% eingestellt.

Um ein möglichst schnelles und vollständiges Abtrocknen zu erreichen, werden bei jeder Spiralumdrehung die zwei Rohröffnung geöffnet. Dadurch kann das Wasser verdampfen und kondensiert nicht an der Rohrwandung, zudem wird ein konstanter O₂ Pegel garantiert.

### 1. Beispiel: Alkalisieren von Stärke

45% (w/w) native Wachsmaisstärke werden mit 55% (w/w) demineralisiertem Wasser aufgeschlämmt und mit einer 20% (w/w) Lösung von NaHCO₃ auf einen pH Wert von 9,5 gestellt. Der Slurry wird über den Büchnertrichter mit eingelegtem Filterpapier (Whatmann® 589/1) vakuumfiltriert und die Stärke mit dem Retsch-Trockner bei 60°C bis zur Gleichgewichtsfeuchte getrocknet.

**Tabelle 1: Gegenüberstellung der Brabenderdaten des Rohstoffes (native WMS), sowie des Rohstoffes aus Beispiel 1 (1, in Folge als unmodifizierte Stärke bezeichnet) wobei VT die Verkleisterungstemperatur, PM das Peakmaximum, BD den Breakdown und EV die Endviskosität darstellen**

| **Bezeichnung** | **VT [°C]** | **PM [BE]** | **BD [BE]** | **EV [BE]** |
|---|---|---|---|---|
| 1 | 67,3 | 1066 | 777 | 546 |
| Native WMS | 68,0 | 1059 | 760 | 547 |

### 2. Beispiel: Trocknung: (130°C)

Die Stärke aus Beispiel 1 wird mit einem Produktstrom von 50 kg/h bei einer Produkttemperatur von 130°C durch die Spirale befördert. Die Dosierung erfolgt gravimetrisch über die automatische Dosierstation. Nach einem Zyklus wird die Probe entnommen und analysiert. Wie aus Tabelle 2 ersichtlich ist, verändert sich die Probe bei der Trocknung nicht in Richtung einer thermisch inhibierten Stärke, sondern behält den Viskositätsverlauf wie die unmodifizierte Stärke.

**Tabelle 2: Gegenüberstellung der Brabenderdaten des Rohstoffes aus Beispiel 1 (unmodifizierte Stärke), sowie einer chemisch modifizierten Stärke (Agenajel 20.321) und zweier am Markt befindlichen inhibierten Stärken (Novation®) gegen die Daten nach der Trocknung (1), wobei VT die Verkleisterungstemperatur, PM das Peakmaximum, BD den Breakdown und EV die Endviskosität darstellen**

| **Bezeichnung** | **Temp. [°C]** | **VT [°C]** | **PM [BE]** | **BD [BE]** | **EV [BE]** |
|---|---|---|---|---|---|
| 1 | 130 | 67,4 | 1408 | 1131 | 528 |
| Unmodifizierte Kontrolle | - | 67,3 | 1066 | 777 | 546 |
| Chem. modifizierte Kontrolle | - | 65,6 | 668 | 32 | 1020 |
| Novation® 2300 | | 65,2 | 506 | 1 | 771 |
| Novation® 2600 | | 66,4 | 682 | 41 | 1011 |

### 3. Beispiel: 190°C

Die beiden Rohröffnungen werden mit einem Schlauch verbunden, um eine Rezirkulation des Produktes zu ermöglichen. Alle Öffnungen an jeder Spiralwindung sind geöffnet. Die Stärke aus Beispiel 1 wird mit einer Flussrate von 100 kg/h zudosiert. Nach der Trocknung bei 130°C für 6 Minuten wird die Heiztemperatur erhöht, um eine Produkttemperatur von 190°C zu erreichen, und so lange im Kreis gefahren, bis das Produkt eine optisch ersichtliche starke Bräunung als auch Geruchsveränderung aufweist. Nach jedem Zyklus (∼6min) wird der Schlauch kurzfristig manuell abgenommen und eine Probe gezogen.

Wie aus Tabelle 3 ersichtlich ist, erhält man mit zunehmender Behandlungsdauer bei einer Temperatur von 190°C Stärke, deren Viskositätsprofil in Richtung einer chemisch modifizierten Kontrollprobe geht und auch mit den am Markt befindlichen thermisch inhibierten Produkten vergleichbar ist. Je länger man die Stärke behandelt, desto höher ist der Grad der Inhibierung und demzufolge erhält man eine geringere Viskosität.

**Tabelle 3: Gegenüberstellung der Brabenderdaten der unmodifizierten Kontrolle, sowie einer chemisch modifizierten Stärke und zweier am Markt befindlichen inhibierten Stärken (Novation®) gegen die Daten nach der Behandlung bei 190°C für unterschiedliche Zeiten (1-5), wobei VT die Verkleisterungstemperatur, PM das Peakmaximum, BD den Breakdown und EV die Endviskosität darstellen**

| **Bezeichnung** | **Temp.** [°C] | **Zeit** [min] | **VT** [°C] | **PM** [BE] | **BD** [BE] | **EV** [BE] |
|---|---|---|---|---|---|---|
| 1 | 190 | 12 | 66,8 | 1117 | 741 | 631 |
| 2 | 190 | 18 | 66,5 | 1039 | 480 | 834 |
| 3 | 190 | 24 | 65,3 | 669 | 19 | 1016 |
| 4 | 190 | 30 | 63,3 | 419 | 0 | 634 |
| 5 | 190 | 36 | 62,0 | 207 | 0 | 371 |
| Unmodifizierte Kontrolle | - | - | 67,3 | 1066 | 777 | 546 |
| Modifizierte Kontrolle | - | - | 65,6 | 668 | 32 | 1020 |
| Novation® 2300 | - | - | 65,2 | 506 | 1 | 771 |
| Novation® 2600 | - | - | 66,4 | 682 | 41 | 1011 |

### 4. Beispiel: 170°C

Die Proben werden nach dem gleichen Schema wie in Beispiel 2 behandelt, mit dem Unterschied, dass die Hitzebehandlung bei einer Produkttemperatur von 170°C durchgeführt wird. Man kann aus Tabelle 4 ersehen, dass mit zunehmender Behandlungsdauer die Intensität der thermischen Inhibierung fortschreitet und man hitzestabile Proben mit einem stark reduzierten Breakdown erhält, die die Eigenschaften von chemisch modifizierten Stärken aufweisen.

**Tabelle 4: Gegenüberstellung der Brabenderdaten der unmodifizierten Stärke, sowie einer chemisch modifizierten Stärke und zwei am Markt befindlichen inhibierten Stärken (Novation®) gegen die Daten nach der Behandlung bei 170°C für unterschiedliche Zeiten (1-6), wobei VT die Verkleisterungstemperatur, PM das Peakmaximum, BD den Breakdown und EV die Endviskosität darstellen**

| **Bezeichnung** | **Temp.** [°C] | **Zeit** [min] | **VT** [°C] | **PM** [BE] | **BD** [BE] | **EV** [BE] |
|---|---|---|---|---|---|---|
| 1 | 170 | 18 | 67,0 | 1125 | 717 | 667 |
| 2 | 170 | 30 | 66,4 | 933 | 193 | 1224 |
| 3 | 170 | 36 | 66,2 | 842 | 101 | 1166 |
| 4 | 170 | 42 | 66,0 | 722 | 14 | 1103 |
| 5 | 170 | 48 | 65,9 | 653 | 3 | 1035 |
| 6 | 170 | 54 | 65,6 | 564 | 0 | 853 |
| Unmodifizierte Kontrolle | - | - | 67,3 | 1066 | 777 | 546 |
| Modifizierte Kontrolle | - | - | 65,6 | 668 | 32 | 1020 |
| Novation® 2300 | - | - | 65,2 | 506 | 1 | 771 |
| Novation® 2600 | - | - | 66,4 | 682 | 41 | 1011 |

### 5. Beispiel: 150°C

Die Proben werden nach dem gleichen Muster wie in Beispiel 2 behandelt, mit dem Unterschied, dass die Hitzebehandlung bei einer Produkttemperatur von 150°C durchgeführt wird. In diesem Fall ist eine thermische Inhibierung nur in geringem Maß gelungen und man erhält im Vergleich zu einer unmodifizierten Stärke nur geringfügig stabilere Stärkemuster.

**Tabelle 5: Gegenüberstellung der Brabenderdaten der unmodifizierten Kontrolle, sowie einer chemisch modifizierten Stärke und zwei am Markt befindlichen inhibierten Stärken (Novation®) gegen die Daten nach der Behandlung bei 150°C für unterschiedliche Zeiten (1-8), wobei VT die Verkleisterungstemperatur, PM das Peakmaximum, BD den Breakdown und EV die Endviskosität darstellen**

| **Bezeichnung** | **Temp.** [°C] | **Zeit** [min] | **VT** [°C] | **PM** [BE] | **BD** [BE] | **EV** [BE] |
|---|---|---|---|---|---|---|
| 1 | 150 | 30 | 66,9 | 1146 | 653 | 743 |
| 2 | 150 | 36 | 66,8 | 1063 | 439 | 868 |
| 3 | 150 | 42 | 66,8 | 1208 | 561 | 923 |
| 4 | 150 | 48 | 66,7 | 968 | 227 | 1118 |
| 5 | 150 | 54 | 66,7 | 968 | 211 | 1204 |
| 6 | 150 | 60 | 66,9 | 936 | 205 | 1318 |
| 7 | 150 | 66 | 67,0 | 923 | 203 | 1320 |
| 8 | 150 | 72 | 66,6 | 915 | 166 | 1222 |
| Unmodifizierte Kontrolle | - | - | 67,3 | 1066 | 777 | 546 |
| Modifizierte Kontrolle | - | - | 65,6 | 668 | 32 | 1020 |
| Novation® 2300 | - | - | 65,2 | 506 | 1 | 771 |
| Novation® 2600 | - | - | 66,4 | 682 | 41 | 1011 |

Es ist ersichtlich, dass die Behandlung der Stärke im Wendelschwingförderer ein kontinuierlicher Prozess ist und die Reaktion exponentiell schneller abläuft, je höher die Temperatur eingestellt ist. Es können mit dem Wendelschwingförderer äquivalente Kurven zu den am Markt befindlichen thermisch inhibierten Stärkemustern erzeugt werden. Man kann deutlich sehen, dass bei höherer Temperatur in kürzerer Zeit das gleiche Ergebnis erhalten werden kann wie bei niedrigen Temperaturen bei längerer Zeit.

### 6. Beispiel: Anwendungstechnischer Vergleich von thermisch inhibierter Stärke

Drei der im Wendelschwingförderer erzeugten Proben (190°C/24min, 170°C/36min, 170°C/54min.) werden in einer 40° Brix Kirsch-Fruchtzubereitung verarbeitet und deren Tauglichkeit in einem sensiblen Lebensmittelsystem mit saurem pH Wert getestet.

In nachfolgender Tabelle 6 ist die Rezeptur der 40° Brix Kirsch-Fruchtzubereitung zur anwendungstechnischen Überprüfung der erzeugten Stärke-Muster dargestellt.

**Tabelle 6: Rezeptur 40° Brix Kirsch Fruchtzubereitung**

| **Material** | **Masse** |
|---|---|
| Wasser | 153,00 |
| Sauerkirschen 1/2 cut | 400,00 |
| Natrium Citrat | 1,00 |
| Zucker *aufheizen bis 40°C* | 300,00 |
| Wasser | 100,00 |
| Stärke *Zugabe von Stärkeaufschlämmung, aufheizen bis 95°C* | 45,00 |
| Zitronensäure *aufheizen bis 92°C, 10 min halten* | 1,00 |
| **Summe** | **1000,00** |

In folgender Auswertung werden die Musterproben in Bezug auf Geschmack, Optik und Viskosität bzw. Rheologie gegenübergestellt.

**Tabelle 7: Auflistung der Ergebnisse von unterschiedlichen produzierten thermisch inhibierten Stärken in einer 40° Brix Kirsch-Fruchtzubereitung**

| **Stärke** | **pH** | **Visc [mm/ 30 sec] D=1** | **Visc [mm/ 30 sec] D=14** | **Synärese in FZ D=14** | **Textur FZ** | **Ausmischung im Joghurt** | **Geschmack** |
|---|---|---|---|---|---|---|---|
| **190°C-2 4min** | 3,28 | 58 | 50 | nein | Sehr gut | gut, schöne Struktur | typisch |
| **170°C-3 6min** | 3,30 | 48 | 39 | nein | Gut, etwas gelig | gut, schöne Struktur | typisch |
| **170°C-54min** | 3,32 | 60 | 66 | nein | Gut | gut, schöne Struktur | typisch |

Die Viskositäten der im Wendelschwingförderer hergestellten erfindungsgemäßen Proben sind im Brabender mit der Qualität der Novation-Stärken des Standes der Technik vergleichbar. Zudem sind sie in der Lage, chemisch modifizierte Stärken zu substituieren.

Die bei 170°C für 54 Minuten behandelte Probe zeigt einen ähnlichen Viskositätsverlauf wie die Novation 2300 mit einer etwas höheren Viskosität.

Sowohl die Probe bei 170°C nach 42 minütiger Prozessierung als auch die Probe bei 190°C nach 24 Minuten Behandlung zeigen ein der Novation 2600 und somit einer am Markt befindlichen thermisch inhibierten Stärke entsprechendes Viskositätsprofil.

## Patentansprüche

1. Verfahren zur Herstellung von thermisch inhibierter Stärke und stärkehaltigen Mehlen durch thermische Behandlung von bis zu einem Gehalt an Trockensubstanz von größer gleich 98%-Masse, besonders bevorzugt 99%-Masse vorgetrockneter, nativer Stärke, mit einem pH von mindestens 7, **dadurch gekennzeichnet, dass** die thermische Behandlung in Gegenwart von mind. 0,1 Vol.% Sauerstoff bis Luftsauerstoff bei einer Produkttemperatur von zwischen 150 und 200°C, in einem Wendelschwingförderer stattfindet.

2. Verfahren nach Anspruch 1, **dadurch gekennzeichnet, dass** die thermische Behandlung in Gegenwart von mind. 0,5 Vol.-% Sauerstoff erfolgt.

3. Verfahren nach Anspruch 1 oder 2, **dadurch gekennzeichnet, dass** die thermische Behandlung in Gegenwart von mind. 5 Vol.-% Sauerstoff erfolgt.

4. Verfahren nach einem der Ansprüche 1 bis 3, **dadurch gekennzeichnet, dass** die thermische Behandlung in Gegenwart von mind. 10 Vol.-% Sauerstoff erfolgt.

5. Verfahren nach einem der Ansprüche 1 bis 4, **dadurch gekennzeichnet, dass** die thermische Behandlung in Gegenwart von Luftsauerstoff erfolgt.

6. Verfahren nach einem der Ansprüche 1 bis 5, **dadurch gekennzeichnet, dass** die thermische Behandlung bei einer Produkttemperatur von zwischen 155 und 175°C erfolgt.

7. Verfahren nach einem der Ansprüche 1 bis 6, **dadurch gekennzeichnet, dass** die Stärke in granulärer Form vorliegt.

8. Verfahren nach einem der Ansprüche 1 bis 7, **dadurch gekennzeichnet, dass** die Stärke einen Amylosegehalt von kleiner 5%-Masse, bevorzugt kleiner 2%-Masse aufweist.

9. Verfahren nach Anspruch 8, **dadurch gekennzeichnet, dass** die Stärke eine amylopektinreiche Maisstärke ist.

## Claims

1. Method for preparing thermally inhibited starch and starchy flours by means of thermal treatment of native starch that has been pre-dried to a dry matter content of greater than or equal to 98% by weight, particularly preferably 99% by weight, and has a pH of at least 7, **characterised in that** the thermal treatment occurs in the presence of at least 0.1 vol.% oxygen to atmospheric oxygen at a product temperature of between 150 and 200°C, in a vibrating spiral conveyor.

2. Method according to claim 1, **characterised in that** the thermal treatment occurs in the presence of at least 0.5 vol.% oxygen.

3. Method according to either claim 1 or claim 2, **characterised in that** the thermal treatment occurs in the presence of at least 5 vol.% oxygen.

4. Method according to any of claims 1 to 3, **characterised in that** the thermal treatment occurs in the presence of at least 10 vol.% oxygen.

5. Method according to any of claims 1 to 4, **characterised in that** the thermal treatment occurs in the presence of atmospheric oxygen.

6. Method according to any of claims 1 to 5, **characterised in that** the thermal treatment occurs at a product temperature of between 155 and 175°C.

7. Method according to any of claims 1 to 6, **characterised in that** the starch is present in granular form.

8. Method according to any of claims 1 to 7, **characterised in that** the starch has an amylose content of less than 5% by weight, preferably less than 2% by weight.

9. Method according to claim 8, **characterised in that** the starch is an amylopectin-rich corn starch.

## Revendications

1. Procédé de préparation d'amidon inhibé thermiquement et de farines contenant de l'amidon par traitement thermique d'amidon natif pré-séché, ayant une teneur en matière sèche supérieure ou égale à 98 % en masse, de manière particulièrement préférée 99 % en masse, à un pH d'au moins 7, **caractérisé en ce que** le traitement thermique s'opère en présence d'au moins 0,1 % en volume d'oxygène jusqu'au taux d'oxygène de l'air à une température de produit comprise entre 150 et 200 °C, dans un convoyeur vibrant hélicoïdal.

2. Procédé selon la revendication 1, **caractérisé en ce que** le traitement thermique s'effectue en présence d'au moins 0,5 % en volume d'oxygène.

3. Procédé selon la revendication 1 ou 2, **caractérisé en ce que** le traitement thermique s'effectue en présence d'au moins 5 % en volume d'oxygène.

4. Procédé selon l'une des revendications 1 à 3, **caractérisé en ce que** le traitement thermique s'effectue en présence d'au moins 10 % en volume d'oxygène.

5. Procédé selon l'une des revendications 1 à 4, **caractérisé en ce que** le traitement thermique s'effectue en présence de l'oxygène de l'air.

6. Procédé selon l'une des revendications 1 à 5, **caractérisé en ce que** le traitement thermique s'effectue à une température de produit comprise entre 155 et 175 °C.

7. Procédé selon l'une des revendications 1 à 6, **caractérisé en ce que** l'amidon se présente sous une forme granulaire.

8. Procédé selon l'une des revendications 1 à 7, **caractérisé en ce que** l'amidon présente une teneur en amylose inférieure à 5 % en masse, de préférence inférieure à 2 % en masse.

9. Procédé selon la revendication 8, **caractérisé en ce que** l'amidon est un amidon de maïs riche en amylopectine.
